Europäisches Patentamt

European Patent Office

Office européen des brevets

(11) Numéro de publication : **0 462 018 A1**

# (12) DEMANDE DE BREVET EUROPEEN

(21) Numéro de dépôt : **91401584.7**

(22) Date de dépôt : **14.06.91**

(51) Int. Cl.⁵ : **A01G 27/00**

(30) Priorité : **14.06.90 FR 9007401**

(43) Date de publication de la demande :
**18.12.91 Bulletin 91/51**

(84) Etats contractants désignés :
**BE DE ES GB IT LU NL SE**

(71) Demandeur : **HUTCHINSON**
**2 rue Balzac**
**F-75008 Paris (FR)**

(72) Inventeur : **Lepoix, Louis**
**Quettigstrasse 10a**
**W-7570 Baden-Baden (DE)**

(74) Mandataire : **Ramey, Daniel et al**
**Cabinet Ores 6 Avenue de Messine**
**F-75008 Paris (FR)**

(54) **Dispositif de culture de plantes en pot, à grande réserve d'eau.**

(57) Dispositif de culture de plantes en pot, comprenant un réservoir d'eau (12) à parois tubulaires coaxiales (26, 28), entourant extérieurement un pot de culture de plantes et placé dans une cuvette dans lequel il délivre périodiquement de petites quantités d'eau, au moyen d'une vanne d'irrigation à réglage automatique de débit. L'eau remonte ensuite par capillarité de la cuvette à l'intérieur du pot.

FIG.2

EP 0 462 018 A1

L'invention concerne un dispositif de culture de plantes en pot, à grande réserve d'eau.

Il est déjà connu de placer un pot de fleurs dans une cuvette formant une petite réserve d'eau et de prévoir une bande de matière absorbante, par exemple textile, s'étendant de l'intérieur du pot jusque dans la cuvette pour assurer, par capillarité, une remontée de l'eau à l'intérieur du pot et permettre l'irrigation des plantes cultivées dans le pot.

On a déjà proposé également que, le fond du pot étant surélevé par rapport à celui de la cuvette, des espaces ou passages de circulation d'air soient ménagés entre le fond du pot et l'extérieur, pour permettre l'aération des racines des plantes et éviter leur pourrissement.

L'inconvénient de ces moyens connus est que la réserve d'eau constituée par la cuvette est relativement faible et ne permet au mieux que quelques jours d'irrigation des plantes.

Il existe par ailleurs, des systèmes beaucoup plus volumineux qui comprennent des récipients remplis d'eau que l'on relie à des pots de fleurs ou à des bacs de culture par des tuyaux souples munis de préférence de moyens de réglage automatique de débit d'eau. Ces systèmes sont pour l'essentiel destinés à être utilisés pendant des absences plus ou moins prolongées des occupants d'une maison ou d'un appartement, par exemple pendant les périodes de vacances, en raison de la nature même des moyens utilisés : un récipient de plusieurs litres, rempli d'eau et placé à un niveau supérieur à celui des plantes à irriguer, relié à un ou à plusieurs tuyaux de caoutchouc aboutissant aux pots ou aux bacs de culture, que l'on rassemble à proximité du récipient rempli d'eau.

L'invention a pour objet un dispositif de culture de plantes en pot, ayant une grande réserve d'eau permettant une autonomie d'irrigation prolongée pouvant atteindre plusieurs mois, ce dispositif ayant en outre un caractère esthétique certain.

L'invention a encore pour objet un dispositif du type précité, qui ne soit pas incompatible avec une aération correcte des racines des plantes cultivées dans le pot.

L'invention a encore pour objet un dispositif de ce type, qui puisse être transformé de façon simple en un ensemble classique pot-soucoupe, tout en conservant son caractère esthétique.

L'invention propose, à cet effet, un dispositif de culture de plantes en pot, à grande réserve d'eau, comprenant un pot destiné à être rempli de terre ou analogue et comportant un fond à fentes pour l'aération des racines ainsi que des moyens d'appui sur une surface de support, une cuvette dans laquelle est posé le pot et qui est destinée à contenir une petite quantité d'eau, et des moyens d'amenée d'eau dans le pot par capillarité, s'étendant entre l'intérieur du pot et le fond de la cuvette, caractérisé en ce qu'il comprend un réservoir d'eau entourant extérieurement le pot et faisant office de cache-pot, communiquant avec ladite cuvette par un passage muni de moyens de réglage automatique de débit d'eau en fonction des besoins des plantes du pot, et en ce que la cuvette précitée forme socle du réservoir et délimite avec le fond de celui-ci un passage d'air annulaire, pour l'aération des racines des plantes du pot.

Ainsi, selon l'invention, chaque pot de culture de plantes est associé à un réservoir l'entourant extérieurement, qui forme une réserve d'eau et qui délivre dans la cuvette une petite quantité d'eau déterminée en fonction des besoins d'irrigation des plantes du pot et ensuite amenée par capillarité à l'intérieur du pot, sans gêner l'aération des racines des plantes.

Les moyens de réglage de débit d'eau comprennent par exemple une vanne d'irrigation du type à élément poreux dilatable fermant plus ou moins, en fonction de sa dilatation, un tube souple d'écoulement d'eau.

Une telle vanne permet de délivrer périodiquement une petite quantité d'eau dans la cuvette, sans vider de façon continue le réservoir d'eau entourant extérieurement le pot.

Ce réservoir peut avoir une capacité de plusieurs litres, permettant l'irrigation des plantes pendant une durée de un à quelques mois, en fonction des besoins en eau des plantes.

Selon un mode de réalisation préféré de l'invention, le réservoir comprend deux parois coaxiales ou concentriques, l'une extérieure et l'autre intérieure, réunies entre elles à leur extrémité inférieure par le fond du réservoir, dans lequel débouche le passage précité.

Avantageusement, le fond du réservoir comporte une cavité relativement peu profonde dont le fond présente une cheminée faisant partie du passage précité.

Ainsi, les matières solides contenues éventuellement dans l'eau du réservoir peuvent se déposer sur le fond de cette cavité, sans passer dans la cuvette.

Pour faciliter la manipulation du dispositif selon l'invention, le réservoir peut être fixé à la cuvette, par exemple par vissage.

On prévoit également un couvercle amovible de fermeture de l'extrémité supérieure du réservoir, ce couvercle comprenant une ouverture centrale et étant avantageusement réalisé en deux parties.

Les moyens d'appui du pot sur le fond de la cuvette sont par exemple des pieds tubulaires qui débouchent à l'intérieur du pot à une extrémité et au voisinage du fond de la cuvette à leur autre extrémité et qui forment les moyens d'amenée d'eau dans le pot par capillarité lorsqu'ils sont remplis de terre ou d'une matière absorbante analogue.

Enfin, le dispositif selon l'invention peut comprendre une autre cuvette destinée à recevoir le pot seul lorsque le réservoir d'eau n'est pas utilisé, cette autre cuvette ayant des dimensions et formes correspondant à celles du pot.

Le pot peut ainsi être simplement posé dans cette autre cuvette, qui forme une petite réserve d'eau, l'ensemble conservant son caractère esthétique puisque cette autre cuvette a été conçue pour s'adapter au pot en question.

L'invention sera mieux comprise et d'autres caractéristiques, détails et avantages de celle-ci apparaitront plus clairement à la lecture de la description qui suit, faite à titre d'exemple en référence aux dessins annexés dans lesquels :

- la figure 1 est une vue schématique en coupe axiale d'un pot faisant partie du dispositif selon l'invention;
- la figure 2 est une vue semblable représentant en coupe axiale le réservoir extérieur;
- la figure 3 est une vue en coupe axiale de la cuvette associée à ce réservoir;
- les figures 4, 5 et 6 sont des vues en plan du pot, du réservoir et de la cuvette respectivement;
- la figure 7 représente schématiquement une vanne d'irrigation utilisée dans le dispositif selon l'Invention;
- la figure 8 est une vue en plan d'un demi-couvercle de fermeture de l'extrémité supérieure du réservoir;
- la figure 9 est une vue en coupe axiale d'une seconde cuvette, destinée à recevoir uniquement le pot du dispositif selon l'invention.

Dans l'exemple de réalisation représenté aux dessins, le pot 10, le réservoir 12 et la cuvette 14 sont des pièces moulées, réalisées dans le même matériau qui peut être une matière plastique du type polypropylène par exemple, de la faïence, de la porcelaine, de la terre cuite, etc...

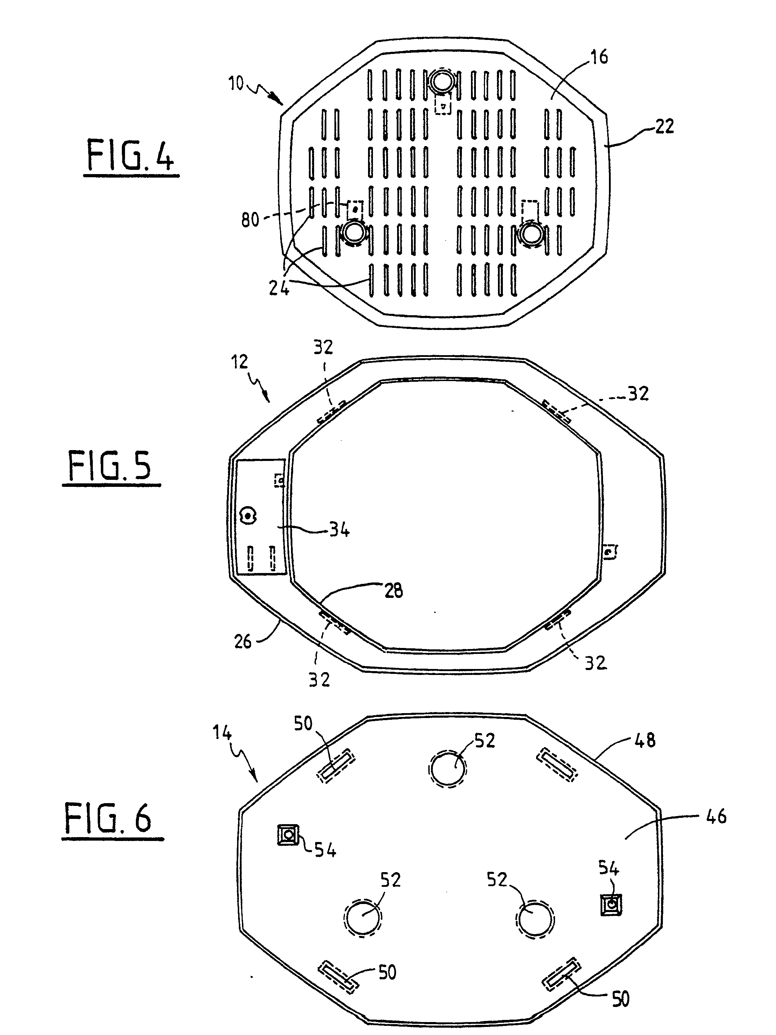

Le pot 10 est de forme tubulaire à section circulaire, ovale, ou polygonale, par exemple à section octogonale légèrement allongée comme on le voit en figure 4, et comprend une extrémité supérieure ouverte et une extrémité inférieure fermée par un fond 16 comportant des pieds tubulaires 18 par exemple au nombre de trois orientés vers le bas.

Ces pieds sont ouverts à leur extrémité supérieure et par exemple échancrés à leur extrémité inférieure.

La paroi latérale 20 du pot 10 comporte, dans l'exemple représenté, un rebord périphérique supérieur 22 orienté vers l'extérieur, facilitant la manutention du pot.

Le fond 16 du pot comporte des séries de fentes parallèles 24 (figure 4) destinées à permettre l'aération des racines des plantes cultivées dans le pot 10.

La paroi latérale 20 du pot présenté un angle de dépouille par rapport à la verticale, de l'ordre de 1° par exemple, facilitant le démoulage du pot lors de sa fabrication.

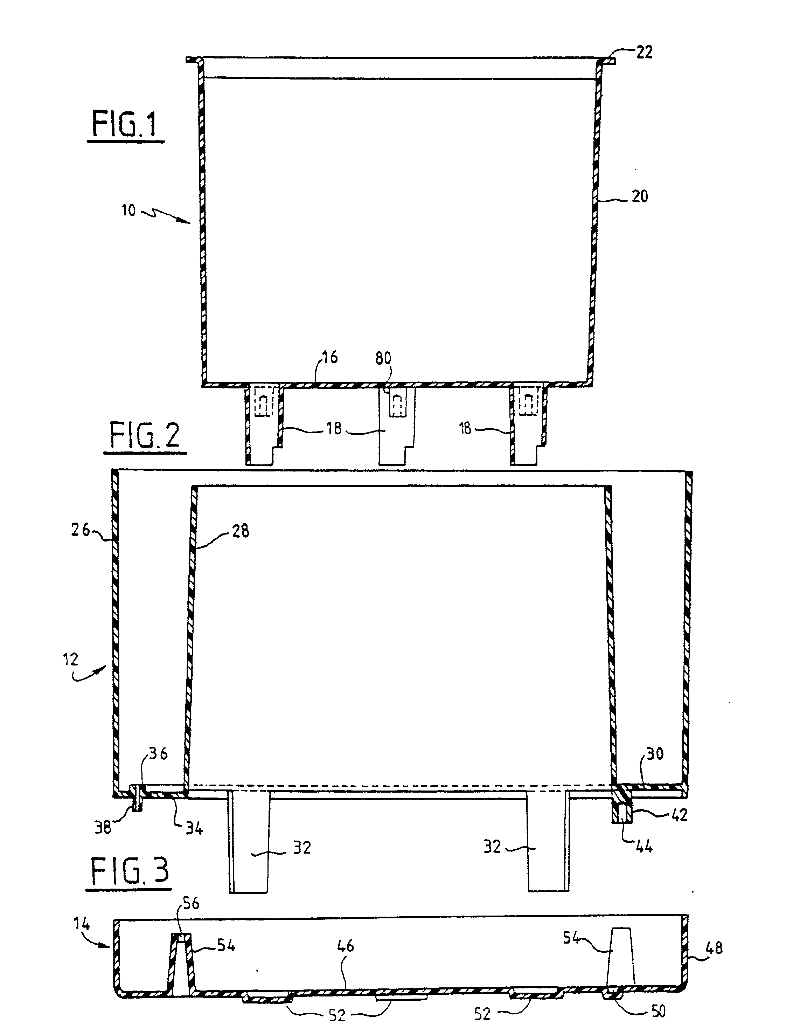

Le réservoir 12, représenté dans les figures 2 et 5, est destiné à entourer extérieurement le pot 10, en jouant ainsi également le rôle d'un cache-pot. Ce réservoir d'eau comprend une paroi tubulaire extérieure 26 et une paroi tubulaire intérieure 28, qui sont sensiblement coaxiales et qui définissent entre elles un volume annulaire ouvert en partie supérieure et fermé en partie inférieure par un fond 30.

Dans l'exemple représenté, la paroi tubulaire intérieure 28 a une forme correspondant à celle de la paroi latérale 20 du pot 10, avec des dimensions transversales légèrement supérieures, tandis que la paroi tubulaire extérieure 26 peut avoir une forme correspondante ou différente.

L'intervalle entre les deux parois 26 et 28 peut être de largeur constante ou variable et est choisi de telle sorte que le volume de l'espace délimité entre les deux parois 26 et 28 soit de un à quelques litres, en fonction de la taille du pot 10.

Le fond annulaire 30 du réservoir 12 est formé de moulage avec des pieds 32 qui s'étendent vers le bas et qui sont par exemple au nombre de quatre dans le mode de réalisation représenté (figure 4) et qui ont une hauteur de quelques centimètres.

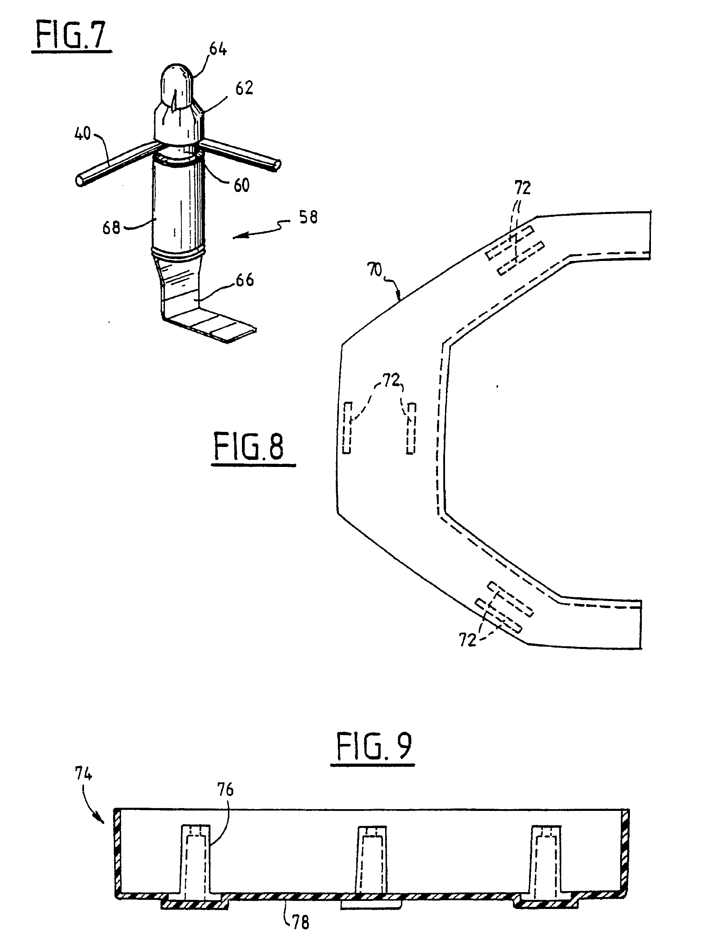

Le fond annulaire 30 comprend encore une cavité ou un renfoncement 34 sur le fond duquel est formée une cheminée 36, s'élevant à une faible hauteur au dessus du fond de la cavité ou du renfoncement 34. Cette cheminée 36 peut être prolongée vers le bas sous le fond 30 du réservoir 12, par un conduit 38 sur lequel on viendra fixer l'extrémité d'un tuyau souple 40 faisant partie de la vanne d'irrigation représentée en figure 7.

On prévoit également, sur la face inférieure du fond 30, des bossages 42 comportant un trou axial borgne 14 débouchant vers le bas et destiné à recevoir une vis de fixation.

Dans la forme de réalisation représentée en figure 2, on voit que la paroi tubulaire intérieure 28 se termine à un niveau légèrement inférieur à celui de la paroi extérieure 26, la différence de niveaux étant au moins égale ou légèrement supérieure à l'épaisseur du rebord périphérique 22 du pot 10 qui viendra recouvrir le bord de la paroi 28.

La cuvette 14 représentée dans les figures 3 et 6 a des dimensions et formes correspondant sensiblement à celles de la paroi tubulaire extérieure 26 du réservoir 12 et comprend un fond plan 46 entouré par un rebord périphérique vertical 48. Des plots 50 d'appui sur une surface de support peuvent être formés en saillie sur la face inférieure du fond 46. Dans celui-ci sont également formées des cavités 52 destinées à recevoir les extrémités inférieures des pieds 18 du pot 10.

Des plots tubulaires 54 sont formés en saillie sur la face supérieure du fond 46, en des points correspondant aux emplacements des bossages 42 du fond 30 du réservoir 12, et comportent en partie supérieure un orifice 56 de réception d'une vis. Les plots tubulaires 54 sont ouverts à leur extrémité inférieure, pour permettre la fixation du réservoir 12 sur la cuvette 14 par introduction des vis dans les plots tubulaires 54 depuis leur extrémité inférieure ouverte et vissage dans les trous borgnes 44 des bossages 42.

La vanne de commande d'irrigation 58 représentée schématiquement en figure 7 est d'un type connu, décrit par exemple dans la demande de brevet français 90 00319 de la demanderesse, à laquelle on pourra se reporter pour une description plus détaillée.

La vanne 58 comprend essentiellement un élément cylindrique 60 en matériau poreux et dilatable par exemple en bois, qui vient écraser plus ou moins, en fonction de sa dilatation, le tuyau souple 40 sur une tête 62 associée éventuellement à un organe vissable 64 de réglage d'une compression initiale du tuyau souple 40.

En partie inférieure, la vanne 58 comprend un pied 66 de longueur réglable.

Un manchon 68 en matériau étanche, par exemple en caoutchouc peut recouvrir extérieurement une partie de l'élément poreux 60 pour retarder son séchage.

On a représenté en figure 8 une vue en plan d'un demi-couvercle 70 du réservoir 12. Le couvercle est réalisé de préférence en deux parties identiques placées bout à bout sur le réservoir pour recouvrir le volume délimité entre les parois 26 et 28 du réservoir.

Chaque demi-couvercle 70 est de forme semi-annulaire, de façon à ne pas recouvrir l'espace central du réservoir 12, dans lequel est logé le pot 10. Des nervures 72 formées en saillie sur la face inférieure de chaque demi-couvercle 70 permettent de positionner correctement celui-ci sur le réservoir 12.

L'utilisation du dispositif selon l'invention découle à l'évidence de ce qui précède :

Le conduit souple 40 de la vanne d'irrigation 58 est fixé sur le conduit 38 du fond du réservoir 12, et la longueur du pied 66 de la vanne est réglée de façon à ce que celle-ci puisse s'étendre plus ou moins en oblique dans la cuvette 14 une fois le montage terminé. Le réglage de la distance entre l'extrémité inférieure de l'élément poreux 60 et le fond de la cuvette permet de déterminer le niveau d'eau dans cette cuvette.

La cuvette est ensuite, de préférence, fixée par vissage sur le réservoir 12. La hauteur des pieds 32 du réservoir est telle qu'il subsiste un passage annulaire de circulation d'air entre le fond 30 du réservoir et le rebord périphérique 48 de la cuvette.

Le pot 10 contenant des plantes et un milieu de culture tel que de la terre, du terreau ou analogue, est ensuite disposé à l'intérieur de l'ensemble réservoir 12 - cuvette 14, les pieds 18 du pot étant placés dans les cavités 52 du fond de la cuvette.

Quand le réservoir 12 est rempli d'eau, le couvercle ou les demi-couvercles 70 ferment l'extrémité supérieure de ce réservoir. Le débit d'eau s'écoulant du réservoir 12 dans la cuvette, est réglé par la vanne 58, l'ouverture du tuyau souple 40 étant périodique, avec des intervalles entre les périodes d'écoulement d'eau de plusieurs heures. L'eau contenue dans la cuvette 14 est absorbée par la terre ou le milieu poreux remplissant les pieds tubulaires 18 du pot 10 et remonte par capillarité à l'intérieur du pot pour irriguer les plantes cultivées.

Le volume du réservoir 12 (par exemple 2 à 5 litres) est conçu pour assurer une autonomie d'irrigation de plusieurs mois.

L'espace laissé libre entre le bord supérieur de la cuvette 14 et le fond du réservoir 12 permet, avec les fentes 24 du fond du pot 10, une aération des racines des plantes et évite leur pourrissement.

Le pot 10 du dispositif selon l'invention peut également être utilisé sans le réservoir 12. Pour cela, il est avantageux de prévoir une autre cuvette 74 (figure 9) dont les formes et dimensions extérieures correspondent à celles du pot 10. Des plots 76 peuvent être formés en saillie sur la face supérieure du fond 78 de cette cuvette 74, en correspondance de bossages 81 formés en saillie sur la face inférieure du fond 16 du pot 10 (figures 1 et 4). Les plots 76 sont tubulaires et permettent la fixation par vissage de la cuvette 74 sous le pot 10, de la même façon que décrit plus haut pour la fixation de la cuvette 14 sous le réservoir 12.

Avantageusement, le rebord périphérique de la cuvette 74 peut comprendre une échancrure partant de son bord supérieur, facilitant le versement d'une petite quantité d'eau dans cette cuvette.

Selon une autre variante de réalisation de l'invention, le réservoir extérieur peut être solidaire du pot, en étant par exemple moulé d'une pièce avec ce dernier.

## Revendications

1. Dispositif de culture de plantes en pot, à grande réserve d'eau, comprenant un pot (10) destiné à être rempli de terre ou analogue et comportant un fond (16) à fentes (24) pour l'aération des racines ainsi que des moyens (18) d'appui sur une surface de support, une cuvette (14) dans laquelle est posé le pot et qui est destinée à contenir une petite quantité d'eau, et des moyens d'amenée d'eau dans le pot par capillarité, s'étendant entre l'intérieur du pot et le fond de la cuvette (14), caractérisé en ce qu'il comprend un réservoir d'eau (12) entourant extérieurement le pot (10) et faisant office de cache-pot, communiquant avec ladite cuvette (14) par un passage (36, 38) muni de moyens (58) de réglage automatique de débit d'eau en fonction des besoins des plantes et en ce que la cuvette (14) forme socle du réservoir (12) et délimite avec le fond (30) de celui-ci un passage annulaire de circulation d'air pour l'aération des racines des plantes du pot.

2. Dispositif selon la revendication 1, caractérisé en ce que le réservoir (12) est indépendant du pot et comprend deux parois (26, 28) coaxiales ou concentriques, l'une extérieure et l'autre intérieure, réunies entre elles à leur extrémité inférieure par le fond (30) du réservoir dans lequel débouche le passage précité.

3. Dispositif selon l'une des revendications précédentes, caractérisé en- ce que le fond (30) du réservoir (12) comporte une cavité (34) relativement peu profonde dont le fond présente une cheminée (36) faisant partie du passage précité.

4. Dispositif selon l'une des revendications précédentes, caractérisé en ce que les moyens de réglage de débit comprennent une vanne d'irrigation (58) du type à élément poreux dilatable (60) fermant plus ou moins, en fonction de sa dilatation, un tuyau souple (40) d'écoulement d'eau.

5. Dispositif selon la revendication 4, caractérisé en ce que ladite vanne (58) est fixée sous le fond du réservoir (12) et s'étend dans la cuvette (14) à distance réglable du fond de celle-ci.

6. Dispositif selon l'une des revendications précédentes, caractérisé en ce que le réservoir (12) est fixé à la cuvette (14), par exemple par vissage.

7. Dispositif selon l'une des revendications précédentes, caractérisé en ce que l'extrémité supérieure du réservoir est fermée par un couvercle amovible comprenant une ouverture centrale de passage du pot (10), ce couvercle étant éventuellement en deux parties (70).

8. Dispositif selon l'une des revendications précédentes, caractérisé en ce que les moyens d'appui du pot (10) sur le fond de la cuvette (14) sont des pieds tubulaires (18) débouchant à l'intérieur du pot et formant moyens d'amenée d'eau dans le pot par capillarité lorsqu'ils sont remplis de terre ou d'une matière poreuse analogue.

9. Dispositif selon l'une des revendications précédentes, caractérisé en ce qu'il comprend une autre cuvette (74), destinée à recevoir le pot (10) seul lorsque le réservoir (12) n'est pas utilisé, cette autre cuvette (74) ayant des dimensions et formes correspondant à celles du pot (10).

FIG.1

FIG.2

FIG.3

FIG.4

FIG.5

FIG.6

FIG.7

64

62

40

60

68

58

66

FIG.8

72

70

72

72

72

FIG.9

74

76

78

Office européen
des brevets

**RAPPORT DE RECHERCHE EUROPEENNE**

Numero de la demande

EP    91 40 1584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | CA-A-1 156 464 (ADLER J.)<br>* page 5 - page 6; figures 1-3 * | 1-3,6,7 | A01G27/00 |
| Y | GB-A-1 592 121 (VACTECH LTD.)<br>* page 2, colonne de gauche, ligne 4 - page 3, colonne de gauche, ligne 6; figures 1,2 * | 1-3,6 | |
| Y | US-A-4 083 147 (GARRICK C.J.)<br>* colonne 3, ligne 30 - colonne 7, ligne 37; figures 1-5 * | 7 | |
| A | | 1-3 | |
| A | US-A-4 083 146 (BRAWKOVIC O.)<br>* colonne 2, ligne 36 - colonne 4, ligne 2; figures 1-5 * | 1-3 | |
| A | EP-A-0 004 159 (ORNSTEIN L.)<br>* page 13, ligne 22 - page 17, ligne 4; figures 1-3 * | 4 | |
| A | GB-A-1 006 801 (HANSSON T.H.)<br>* page 1, colonne de droite, ligne 57 - page 2, colonne de droite, ligne 109; figures 1-8 * | 4 | **DOMAINES TECHNIQUES RECHERCHES (Int. Cl.5)**<br><br>A01G |
| A | US-A-4 231 188 (MCGUIRE J.J.)<br>* colonne 2, ligne 40 - colonne 4, ligne 58; figures 1-3 * | 8 | |

Le présent rapport a été établi pour toutes les revendications

| Lieu de la recherche | Date d'achèvement de la recherche | Examinateur |
|---|---|---|
| LA HAYE | 14 AOUT 1991 | ELSWORTH D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)